# EUROPÄISCHE PATENTSCHRIFT

(11) **EP 1 630 919 B1**
(45) Veröffentlichungstag und Bekanntmachung des Hinweises auf die Patenterteilung: **09.05.2007**
(21) Anmeldenummer: 05016145.4
(22) Anmeldetag: 26.07.2005
(51) Int. Cl.: H02G 3/04

(54) **Einrichtung zum Bereitstellen von Energie und/oder Medien und/oder Daten an einem Arbeitsplatz**
Device for providing energy and/or media and/or data to a workstation
Dispositif pour fournir de l'énergie et/ou médias et/ou données à un poste de travail

(30) Priorität: 30.08.2004 DE 202004013790 U
(43) Veröffentlichungstag der Anmeldung: 01.03.2006
(73) Patentinhaber: GfP (Gesellschaft für Produktivitätsplanung und Produktentwicklung)mbH, 74613 Öhringen (DE)
(72) Erfinder: Schaffitzel, Hermann, 74613 Öhringen (DE)
(74) Vertreter: Patentanwälte Ruff, Wilhelm, Beier, Dauster & Partner

(56) Entgegenhaltungen:
- DE-A1- 10 149 753
- DE-U1- 20 121 189

## Beschreibung

Die Erfindung betrifft eine Einrichtung zum Bereistellen von Energie und / oder Medien und / oder Daten an einem Arbeitsplatz.

Es ist ein System bekannt (DE 10107912 C), um mehrere Arbeitsplätze mit Energie, Medien und Daten zu versorgen. Bei diesem System sind unter der Decke Kanäle verlegt, an die schwenkbare Säulen anschließen, mit denen die Versorgungsanschlüsse in dem Bereich der Greifhöhe einer normal großen Person bringbar sind. Dieses sehr vorteilhafte System kann zu aufwendig sein, wenn nur ein Arbeitsplatz oder sehr wenige Arbeitsplätze mit Energie, Medien und Daten versorgt werden sollen.

Der Erfindung liegt die Aufgabe zugrunde, eine Einrichtung der eingangs genannten Art zu schaffen, die kompakt ist und die einem einzelnen Arbeitsplatz zugeordnet werden kann.

Diese Aufgabe wird dadurch gelöst, dass eine mittels Haltern an einer Decke eines Raumes anbringbare Leuchte vorgesehen ist, die mit einem Schwenkarm eine Einheit bildet, der aus einer im Wesentlichen horizontalen, in der Kontur der Leuchte befindlichen Ruhestellung in eine im Wesentlichen vertikale Arbeitsstellung verschwenkbar ist und der mit in der Arbeitsstellung in Greifhöhe befindlichen Versorgungsanschlüssen versehen ist.

Die Erfindung geht davon aus, dass an einem Arbeitsplatz in der Regel immer eine Leuchte vorhanden sein muss. Der zusätzliche, in die Leuchte integrierte Schwenkarm erfordert nur einen unwesentlich höheren Platzbedarf bei vertretbaren Kosten.

In Ausgestaltung der Erfindung wird vorgesehen, dass der Schwenkarm in einer zentralen Aussparung eines Leuchtengehäuses derart angeordnet ist, dass er in das Leuchtengehäuse einschwenkbar und aus dem Leuchtengehäuse herausschwenkbar ist. Das führt zu einer sehr kompakten, optisch ansprechenden Ausführung.

Bei einer anderen Ausgestaltung der Erfindung wird vorgesehen, dass der Schwenkarm aus zwei Bügeln gebildet ist, die jeweils auf einer Seite eines Leuchtengehäuses schwenkbar gelagert sind und deren freie Enden einen gemeinsamen Anschlusskasten halten. Dabei ist es besonders vorteilhaft, wenn die beiden Bügel in eine Ruheposition parallel zu dem Leuchtengehäuse verschwenkbar sind, in welche Ruheposition der Anschlusskasten vor einer Stirnseite des Leuchtengehäuses liegt.

In weiterer Ausgestaltung der Erfindung wird vorgesehen, dass innerhalb des Schwenkarmes zu den Versorgungsanschlüssen führende Leitungen installiert sind, die im Bereich einer Schwenklagerung für den Schwenkarm mit Anschlusselementen für Versorgungsleitungen versehen sind. Die Einrichtung aus Leuchte und Schwenkarm kann somit als Baueinheit fertig installiert sein, die an der Baustelle nur noch an die in einem Raum verlegten Versorgungsleitungen angeschlossen werden muss.

In weiterer Ausgestaltung der Erfindung ist ein motorischer Schwenkantrieb für den Schwenkarm vorgesehen. Dem motorischen Schwenkantrieb kann beispielsweise ein mittels eines Schlosses absperrbarer Schalter zugeordnet werden, so dass ein Verschwenken des Schwenkarmes nur von einer autorisierten Person durchgeführt werden kann.

Weitere Merkmale und Vorteile der Erfindung ergeben sich aus der nachfolgenden Beschreibung der in den Zeichnungen dargestellten Ausführungsformen und den Unteransprüchen.
- Fig. 1: zeigt eine perspektivische Darstellung einer erfindungsgemäßen Einrichtung mit einem in Arbeitsposition befindlichen Schwenkarm und
- Fig. 2: eine perspektivische Darstellung einer weiteren erfindungsgemäßen Einrichtung mit ebenfalls in der Arbeitsposition befindlichem Schwenkarm.

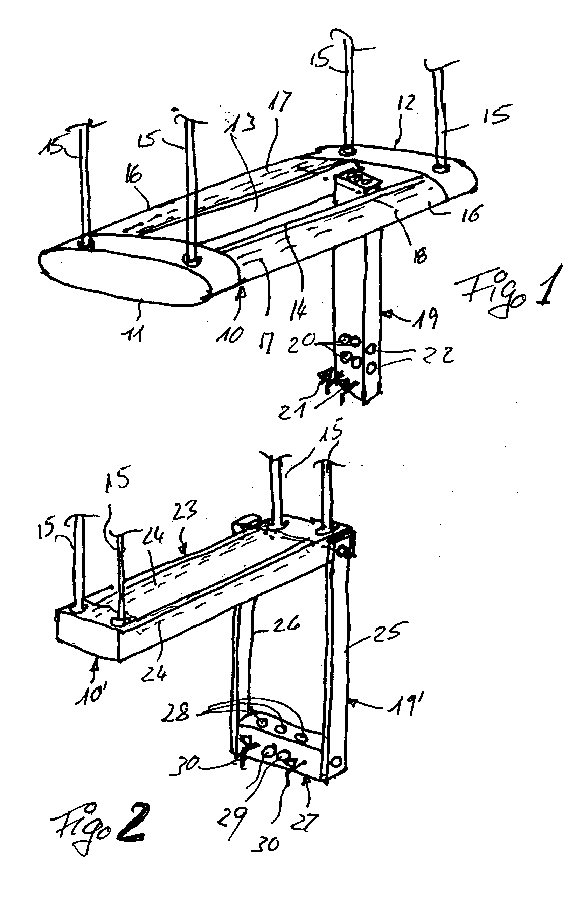

Sowohl bei der Ausführungsform nach Fig. 1 als auch bei der Ausführungsform nach Fig. 2 sind die Leuchten 10, 10' in einer Höhe angeordnet, beispielsweise in einer Höhe von 2,30 m, die außerhalb der Greifhöhe einer Person mit normaler Köpergröße liegt. In der Ruhestellung befinden sich die Schwenkarme 19, 19' in der Kontur der Leuchte 10, 10' und somit ebenfalls außerhalb der Greifhöhe einer normal großen Person. In der jeweils dargestellten Arbeitsstellung, in der die Schwenkarme 19, 19' von der Leuchte 10, 10' hinweg nach unten in eine im Wesentlichen vertikale Position verschwenkt worden sind, befinden sich die Versorgungsanschlüsse 20, 21, 22; 28, 29, 30 in Greifhöhe einer normal großen Person, beispielsweise in einer Höhe von 1,6 m.

Die Einrichtung zum Bereitstellung von Energie und Medien und Daten an einem Arbeitsplatz gemäß Fig. 1 ist zunächst eine Leuchte 10. Das Gehäuse der Leuchte 10 besteht aus zwei Endteilen 11, 12, die mit zwei Seitenteilen 13, 14 einen in der Mitte offenen Rahmen bilden. Das Leuchtengehäuse ist mit Hängehaltern 15 versehen, mit denen es an einer Decke eines Raumes im Bereich eines Arbeitsplatzes aufgehängt wird. Das Leuchtengehäuse ist auf der Außenseite der Seitenteile 13, 14 mit einer durchsichtigen Abdeckung 16 versehen, innerhalb welcher in bekannter Weise Leuchtstoffröhren 17 angeordnet sind. In dem Innenraum zwischen den beiden Seitenteilen 13, 14 ist im Bereich eines der Endteile 12 ein um eine Achse 18 schwenkbarer Schwenkarm 19 gelagert. Der Schwenkarm 19 ist mittels eines elektromotorischen Antriebes um die Schwenkachse 18 zwischen der dargestellten Arbeitsposition, in welchem er im Wesentlichen vertikal ausgerichtet ist, und einer Ruheposition verschwenkbar, in welcher er zwischen die beiden Seitenteile 13, 14 eingeschwenkt ist.

Der Schwenkarm 19 ist mit Versorgungsanschlüssen versehen, beispielsweise Anschlüssen 20 zur Versorgung mit Elektroenergie, Anschlüssen 21 für Gas und Wasser und Datenanschlüssen 22. Die Leitungen zu den Versorgungsanschlüssen 20, 21, 22 sind innerhalb des Schwenkarmes verlegt. Sie führen zu Anschlusselementen, die sich am oberen Ende des Schwenkarmes 19 befinden. Das können Schraub- oder Steckanschlüsse für entsprechende von einer Decke kommende Leitungen sein. Aus dem Schwenkarm 19 können aber auch flexible Leitungen herausgeführt werden, die mit an der nicht dargestellten Decke stationär vorhandenen stationären Anschlüsse verbunden werden. Die flexiblen Leitungen sind dann so ausgelegt, dass sie die Schwenkbewegung des Schwenkarmes 19 zulassen.

Bei der Ausführungsform nach Fig. 2 ist ein im Wesentlichen quaderförmiges Leuchtengehäuse 23 vorgesehen, das mit Hängehaltern 15 an einer Decke eines Raumes oberhalb eines Arbeitsplatzes aufhängbar ist. Das Leuchtengehäuse 23 besitzt in seiner Unterseite und / oder seiner Oberseite eine Lichtabstrahlöffnung, die offen oder mit einer Abdeckung versehen ist. Hinter der Lichtabstrahlöffnung befinden sich ein oder mehrere Leuchtstoffröhren 24.

An der Außenseite des Leuchtengehäuses 23 sind im Bereich eines Stirnendes zwei Bügel 25, 26 schwenkbar gelagert, die an ihrem anderen Ende mittels eines Anschlusskastens 27 miteinander verbunden sind. Der Anschlusskasten 27 enthält Versorgungsanschlüsse für Medien, Energie und Daten, beispielsweise Steckanschlüsse 28 für elektrische Energie sowie Steckanschlüsse für Datenleitungen und Anschlüsse 30 für Gas und Wasser.

Die Leitungen zu den Anschlüssen 28, 29, 30 des Anschlusskastens 27 sind innerhalb der Bügel 25, 26 verlegt, die im Bereich ihres oberen, um eine Schwenkachse 31 gelagerten Endes mit Verbindungselementen zum Verbinden mit in dem Gebäude stationär verlegten Versorgungsleitungen ausgerüstet sind. Dies können Schraubanschlüsse in dem Ende der Bügel sein oder flexible Anschlussleitungen, die an stationäre Anschlüsse der Decke angeschlossen werden können. Die Bügel 25, 26 sind so lang, dass der Anschlusskasten 27 vor das der Schwenkachse abgewandte Stirnende des Leuchtengehäuses 23 verschwenkbar ist. In dieser Position liegen die Bügel 25, 26 im Wesentlichen parallel zu den Seiten des Leuchtengehäuses 23.

Auch bei der Ausführungsform nach Fig. 2 ist ein elektromotorischer Schwenkantrieb für die beiden Bügel 25, 26 vorgesehen, der mittels einer Fernbedienung oder mittels eines an einer vorgegebenen Stelle einer Wand des Raumes angeordneten Schalters betätigbar ist.

## Patentansprüche

1. Einrichtung zum Bereitstellen von Energie und / oder Medien und / oder Daten an einem Arbeitsplatz, **dadurch gekennzeichnet, dass** eine mittels Haltern 15 an einer Decke eines Raumes anbringbare Leuchte (10, 10') vorgesehen ist, die mit einem Schwenkarm (19, 19') eine Einheit bildet, der aus einer im Wesentlichen horizontalen, in der Kontur der Leuchte befindlichen Ruhestellung in eine im Wesentlichen vertikale Arbeitsstellung verschwenkbar ist und der mit in der Arbeitsstellung in Greifhöhe befindlichen Versorgungsanschlüssen (20, 21, 22; 28, 29, 30) versehen ist.

2. Einrichtung nach Anspruch 1, **dadurch gekennzeichnet, dass** der Schwenkarm (19) in einer zentralen Aussparung eines Leuchtengehäuses (11, 12, 13, 14) derart angeordnet ist, dass er in das Leuchtengehäuse einschwenkbar und aus dem Leuchtengehäuse ausschwenkbar ist.

3. Einrichtung nach Anspruch 2, **dadurch gekennzeichnet, dass** das Leuchtengehäuse (11, 12, 13, 14) beidseits der zentralen Aussparung mit wenigstens einer Leuchtstoffröhre (17) ausgerüstet ist.

4. Einrichtung nach Anspruch 1, **dadurch gekennzeichnet, dass** der Schwenkarm (19') aus zwei Bügeln (25, 26) gebildet ist, die jeweils auf einer Seite eines Leuchtengehäuses (23) schwenkbar gelagert sind und deren freie Enden einen gemeinsamen Anschlusskasten (27) halten.

5. Einrichtung nach Anspruch 4, **dadurch gekennzeichnet, dass** die beiden Bügel (25, 26) in eine Ruheposition parallel zu dem Leuchtengehäuse (23) verschwenkbar sind, in welcher Ruheposition der Anschlusskasten vor einer Stirnseite des Leuchtengehäuses (23) liegt.

6. Einrichtung nach einem der Ansprüche 1 bis 5, **dadurch gekennzeichnet, dass** innerhalb des Schwenkarmes (19, 19') zu den Versorgungsanschlüssen (20, 21, 22; 28, 29, 30) führende Leitungen installierst sind, die im Bereich einer Schwenklagerung für den Schwenkarm mit Anschlusselementen für Versorgungsleitungen versehen sind.

7. Einrichtung nach einen der Ansprüche 1 bis 6, **dadurch gekennzeichnet, dass** ein motorischer Schwenkantrieb für den Schwenkarm (19, 19') vorgesehen ist.

## Claims

1. System for supplying power and/or media and/or data to a workstation, **characterised in that** a lamp (10, 10') which can be mounted on a ceiling of a room by means of holders (15) is provided, constituting a unit with a pivot arm (19, 19') which can be pivoted out of an essentially horizontal position disposed in the contour of the lamp in the non-operating position into an essentially vertical working position and which is provided with supply terminals (20, 21, 22; 28, 29, 30) disposed at a height that is within reach in the working position.

2. System as claimed in claim 1, **characterised in that** the pivot arm (19) is disposed in a central cut-out of a lamp housing (11, 12, 13, 14) so that it can be pivoted into the lamp housing and pivoted out of the lamp housing.

3. System as claimed in claim 2, **characterised in that** the lamp housing (11, 12, 13, 14) is equipped with at least one fluorescent tube (17) on either side of the central cut-out.

4. System as claimed in claim 1, **characterised in that** the pivot arm (19') comprises two brackets (25, 26) which are pivotably mounted on a side of a lamp housing (23) respectively, the free ends of which jointly hold a junction box (27).

5. System as claimed in claim 4, **characterised in that** the two brackets (25, 26) can be pivoted into a non-operating position parallel with the lamp housing (23) and the junction box lies in front of an end face of the lamp housing (23) in this non-operating position.

6. System as claimed in one of claims 1 to 5, **characterised in that** lines leading to the supply terminals (20, 21, 22; 28, 29, 30) are installed inside the pivot arm (19, 19'), which are provided with terminal elements for supply lines disposed in the region of a pivot bearing for the pivot arm.

7. System as claimed in one of claims 1 to 6, **characterised in that** a motorised pivot drive is provided for the pivot arm (19, 19').

## Revendications

1. Dispositif pour fournir de l'énergie et/ou des médias et/ou des données à un poste de travail, **caractérisé en ce qu'**un luminaire (10, 10') pouvant être placé au moyen de supports (15) sur un plafond d'un local est prévu, lequel forme une unité avec un bras pivotant (19, 19') qui peut pivoter à partir d'une position de repos sensiblement horizontale et se trouvant dans le contour du luminaire dans une position de travail sensiblement verticale et qui est doté de branchements d'alimentation (20, 21, 22 ; 28, 29, 30) se trouvant dans la position de travail à hauteur de préhension.

2. Dispositif selon la revendication 1, **caractérisé en ce que** le bras pivotant (19) est disposé dans un évidement central d'un boîtier de luminaire (11, 12, 13, 14) de telle sorte que le bras pivotant peut basculer à l'intérieur du boîtier de luminaire et peut basculer à l'extérieur de ce boîtier.

3. Dispositif selon la revendication 2, **caractérisé en ce que** le boîtier de luminaire (11, 12, 13, 14) est équipé des deux côtés de l'évidement central avec au moins un tube fluorescent (17).

4. Dispositif selon la revendication 1, **caractérisé en ce que** le bras pivotant (19') est formé de deux étriers (25, 26), qui sont logés de façon à pouvoir basculer chacun sur un côté d'un boîtier de luminaire (23) et dont les extrémités libres maintiennent une boîte de branchement (27) commune.

5. Dispositif selon la revendication 4, **caractérisé en ce que** les deux étriers (25, 26) peuvent basculer dans une position de repos parallèlement au boîtier de luminaire (23), position de repos dans laquelle la boîte de branchement est située devant un côté avant du boîtier de luminaire (23).

6. Dispositif selon l'une quelconque des revendications 1 à 5, **caractérisé en ce que** des lignes allant aux branchements d'alimentation (20, 21, 22 ; 28, 29, 30) sont installées à l'intérieur du bras pivotant (19, 19'), lesquelles lignes sont dotées dans la zone d'un logement basculant pour le bras pivotant d'éléments de raccordement pour des lignes d'alimentation.

7. Dispositif selon l'une quelconque des revendications 1 à 6, **caractérisé en ce qu'**une commande de pivotement par moteur est prévue pour le bras pivotant (19, 19').
